# EUROPEAN PATENT APPLICATION

(11) **EP 3 922 142 A1**
(43) Date of publication of application: **15.12.2021**
(21) Application number: 21177076.3
(22) Date of filing: 01.06.2021
(51) Int. Cl.: A47G 9/10

(54) **PILLOW WITH SUPPORTING STRUCTURE**

(30) Priority: 09.06.2020 TW 109119285; 11.08.2020 TW 109127246
(71) Applicant: Hung, Shun Tien, Taichung City (TW)
(72) Inventor: Hung, Shun Tien, Taichung City (TW)
(74) Representative: Melchior, Robin

(57) **Abstract**

A pillow (100) has a supporting structure (10) and a headrest cushion (20A). The supporting structure (10) has a supporting plate. The supporting plate has multiple supporting elements (11) disposed at intervals. Each one of the multiple supporting elements (11) is able to be independently pressed, to independently restore, and to be independently deformed. The headrest cushion (20A) is resilient and is supported by the supporting plate for supporting a head of a human. When a user rests his head on the pillow (100), each supporting element (11) is deformed independently to provide independent support to the cervical spine of the user.

## Description

### BACKGROUND

### 1. Field of the Invention

The present invention relates to a pillow, and more particularly to a pillow having a supporting structure.

### 2. Description of Related Art

Many people nowadays suffer from sleep disorder. People may be still hyperactive before going to bed and hard to fall asleep due to fast-paced life, stressful work, and drinks with caffeine. Moreover, people usually relieve stress by browsing information on cell phones before falling asleep. However, blue light emitted from the cell phones also disturbs secretion of melatonin that helps people to fall asleep.

In order to improve sleep quality, a conventional pillow with Marshall coils is provided. The conventional pillow with Marshall coils has multiple springs respectively disposed in multiple cotton pockets for supporting the cervical spine of a user to provide proper support to the cervical spine of the user and to resolve the problem of sleep disorder. However, the multiple springs of the conventional pillow with Marshall coils have a same coefficient of elasticity and cannot provide various supporting forces to different body parts of the user. For example, the user's cervical spine needs larger supporting force than the user's head. Nevertheless, under the restriction that the springs have the same coefficient of elasticity, the conventional pillow with Marshall coils cannot provide various supporting forces to the different body parts of the user.

### SUMMARY OF THE INVENTION

The main objective of the present invention is to provide a pillow that provides independent support to the cervical spine of the user.

The pillow has a supporting structure and a headrest cushion. The supporting structure has a supporting plate. The supporting plate has multiple supporting elements disposed at intervals. Each one of the multiple supporting elements is able to be independently pressed, to independently restore, and to be independently deformed. The headrest cushion is resilient and is supported by the supporting plate for supporting a head of a human. When a user rests his head on the pillow, each supporting element is deformed independently to provide independent support to the cervical spine of the user.

### BRIEF DESCRIPTION OF THE DRAWINGS

Fig. 1 is a perspective view of a first embodiment of a pillow in accordance with the present invention;
Fig. 2 is a perspective view of a supporting structure of the pillow in Fig. 1;
Fig. 3 is a top view of the supporting structure in Fig. 2;
Fig. 4 is an operational cross-sectional side view of the pillow in Fig. 1, showing a head of a human resting on the pillow;
Fig. 5 is another operational cross-sectional side view of the pillow in Fig. 1, showing a neck of the human resting on the pillow;

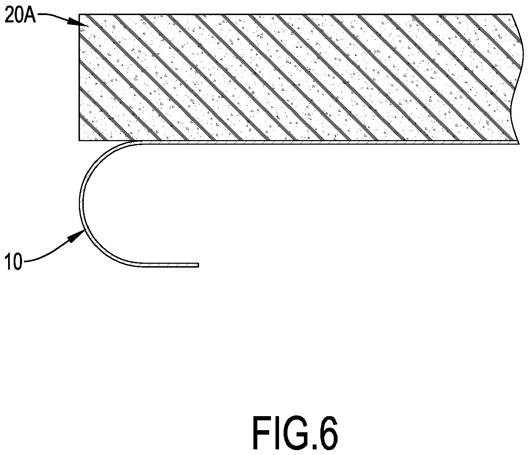

Fig. 6 is an enlarged cross-sectional side view of the pillow in Fig. 1, showing that the supporting structure is pre-stressed and resiliently bended;
Fig. 7 is another enlarged cross-sectional side view of the pillow in Fig. 1, showing that the supporting structure is disposed on a supporting cushion;
Fig. 8A is a partially cross-sectional perspective view of a second embodiment of a pillow in accordance with the present invention;
Fig. 8B is an enlarged cross-sectional perspective view of the pillow in Fig. 8A;
Fig. 9A is a partially cross-sectional perspective view of a third embodiment of a pillow in accordance with the present invention;
Fig. 9B is an enlarged cross-sectional perspective view of the pillow in Fig. 9A;
Fig. 10A is a partially cross-sectional perspective view of a fourth embodiment of a pillow in accordance with the present invention;
Fig. 10B is an enlarged cross-sectional perspective view of the pillow in Fig. 10A;
Fig. 11 is an exploded perspective view of a fifth embodiment of a pillow in accordance with the present invention;
Fig. 12 is an exploded perspective view of the supporting structure and multiple flexible sensors of the pillow in Fig. 11;
Fig. 13 is a cross-sectional side view of the pillow in Fig. 11;

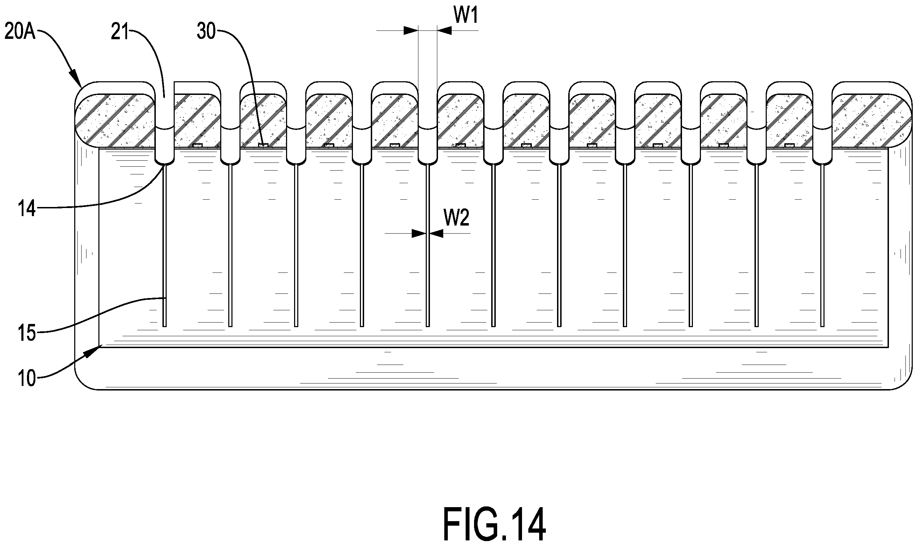

Fig. 14 is another cross-sectional side view of the pillow in Fig. 11, showing each flexible sensor being a pressure sensor;
Fig. 15 is a cross-sectional side view of a sixth embodiment of a pillow in accordance with the present invention, showing each flexible sensor being a flex sensor;
Fig. 16 is an optional perspective view of the pillow in Fig. 11, showing the pillow and a portable device working together;
Fig. 17 is a perspective view of a seventh embodiment of a pillow in accordance with the present invention;
Fig. 18 is a partially cross-sectional perspective view of the pillow in Fig. 17;
Fig. 19 is a cross-sectional side view of a supporting structure of the pillow in Fig. 17;
Fig. 20 is another perspective view of the pillow in Fig. 17;
Fig. 21 is an optional perspective view of the pillow in Fig. 17, showing the pillow and a wireless headphone working together;
Fig. 22 is a perspective view of a eighth embodiment of a pillow in accordance with the present invention;
Fig. 23 is a partially cross-sectional perspective view of the pillow in Fig. 22;
Fig. 24 is a perspective view of a ninth embodiment of a pillow in accordance with the present invention; and
Fig. 25 is a partially cross-sectional perspective view of the pillow in Fig. 24.

### DETAILED DESCRIPTION OF THE INVENTION

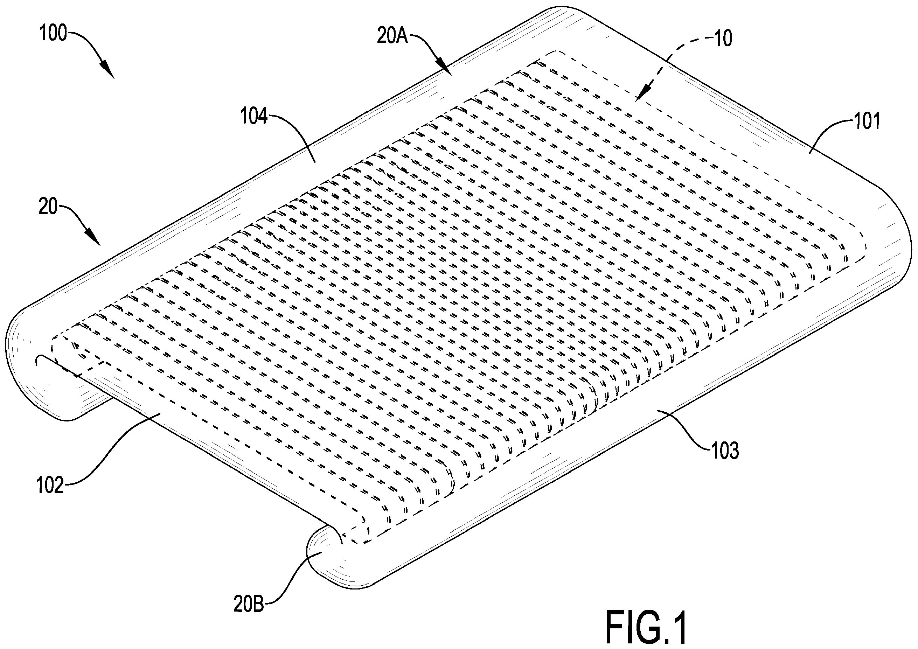

With reference to Figs. 1 to 3, a pillow 100 in accordance with the present invention has a longitudinal direction, two ends 101, 102, two lateral sides103, 104, a supporting structure 10, a cushion 20 distinguished into a headrest cushion 20A, and a supporting cushion 20B. The two ends 101, 102 of the pillow 100 are opposite in the longitudinal direction of the pillow 100. The two lateral sides 103, 104 are parallel to the longitudinal direction of the pillow 100.

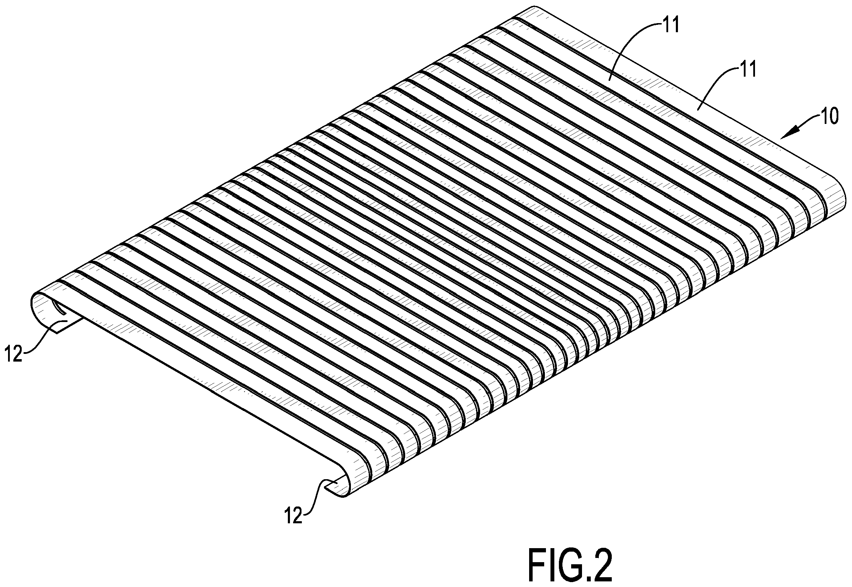

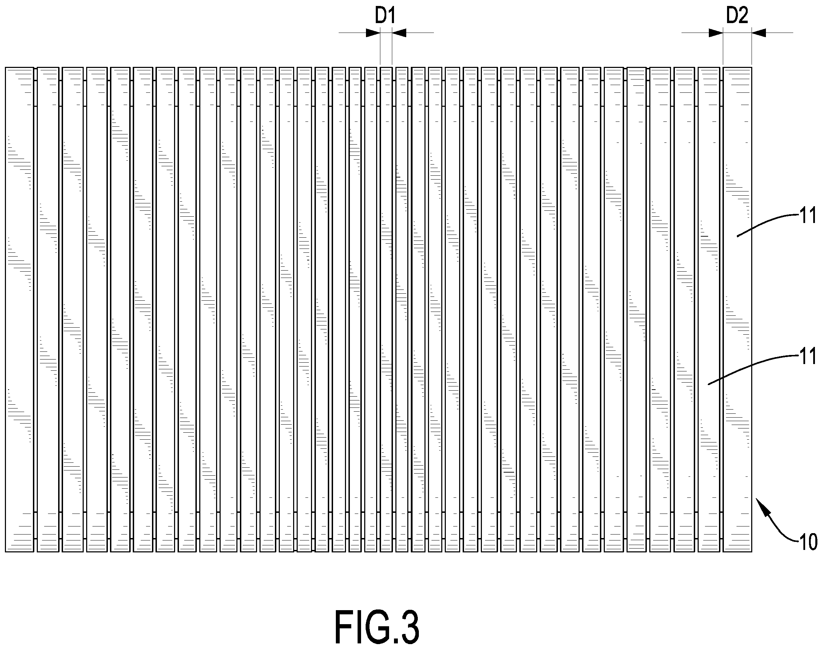

With reference to Figs. 1 and 2, a first embodiment of the pillow 100 in accordance with the present invention is shown. In the first embodiment of the present invention, the supporting structure 10 has a supporting plate and two connecting elements 12. The supporting plate has multiple supporting elements 11. Each one of the multiple supporting elements 11 is an elongated sheet and has two opposite ends respectively extending toward the two lateral sides 103, 104 of the pillow 100. The multiple supporting elements 11 are arranged at intervals and along the longitudinal direction of the pillow 100. The supporting elements 11 are independently deformable by being independently pressed and independently restoring. In the first embodiment of the present invention, each one of the multiple supporting elements 11 is elongated and has an elongating direction. The multiple supporting elements 11 are parallelly disposed. The elongating direction of each one of the multiple supporting elements 11 and the longitudinal direction of the pillow 100 are perpendicular. Each one of the multiple supporting elements 11 extends to the two lateral sides 103, 104 of the pillow 100. The multiple supporting elements 11 are parallel and arranged at intervals. Practically, each one of the multiple supporting elements 11 may be a ring, and the multiple supporting elements 11 are concentrically arranged at intervals. Arranged patterns of the multiple supporting elements 11 and outlines of each one of the multiple elements 11 are not restricted as long as each one of the multiple supporting elements 11 can be independently pressed, can be independently deformed, and can independently restore. With reference to Figs. 1 and 3, each one of the supporting elements 11 has a width. Widths of the multiple supporting elements 11 gradually decrease from two opposite ends 101, 102 of the pillow 100 towards a middle section of the pillow 100. For example, in Fig. 3, one of the multiple supporting elements 11 disposed at the left end of the pillow 100 has a width D2 of 18 mm, another one of the multiple supporting elements 11 disposed at the middle section of the pillow 100 has a width D1 of 10 mm.

The two connecting element 12 are connected to the multiple supporting elements 11, are pre-stressed, and are disposed oppositely in the elongating direction of each one of the multiple supporting elements 11. When the pillow 100 in accordance with the present invention is placed in a bed, the two connecting elements 12 are configured to support the pillow 100.

Practically, the supporting structure 10 may have one connecting element 12 only. The connecting element 12 and the multiple supporting elements 11 surround a receiving space for receiving cell phones, portable chargers, or audio players. The connecting element 12 may have an extending arm being parallel to each one of the multiple supporting elements 11 to form an opening disposed at one of the two sides 103, 104 of the pillow 100. Structure of the connecting element 12 can be designed according to various needs and for requirements of different visual effects. The structure of each connecting element 12 is not restricted as long as each one of the multiple supporting elements 11 can be independently pressed, can be independently deformed, and can independently restore.
In the present invention, the supporting structure 10 is made of a composite material with thermoplastic matrix. Practically, the supporting structure 10 may be made of metal, plastic, or even wood as long as each one of the multiple supporting elements 11 can be independently pressed, can be independently deformed, and can independently restore. The material of the supporting structure 10 is not restricted.

In the first embodiment of the present invention, a prepreg is bended at two sides of the prepreg. Then, multiple slits are defined through the prepreg to form the multiple supporting elements 11 and the two connecting elements 12 respectively connected to the two opposite ends of each one of the multiple supporting elements 11.

In the first embodiment of the present invention, the supporting structure 10 is composed by a carbon fiber composite layer and two glass fiber composite layers. The carbon fiber composite layer is clamped between the two glass fiber composite layers having better tenacity than carbon fiber composite layer, so the supporting structure 10 has good ductility to sustain loads and is less breakable.

Moreover, when carbon fibers of the carbon fiber composite layer are broken, the two glass fiber composite layers wrap the carbon fiber composite layer that is broken to avoid exposure of the broken carbon fibers. Practically, the supporting structure 10 may be implemented as a carbon fiber composite layer covered by a glass fiber composite layer or even be implemented as a carbon fiber composite layer according to practical requirements.

With reference to Figs. 1 and 2, the headrest cushion 20A is designed for a head of a user to rest thereon, is resilient, and is supported by the supporting plate of the supporting structure 10. The headrest cushion 20A may be made of foam, rubber, emulsion, or similar flexible materials. In the first embodiment of the present invention, the headrest cushion 20A and the supporting cushion 20B are integrally connected and fully wrapped around the supporting structure 10. Practically, the pillow 100 may merely have the headrest cushion 20A covering the supporting structure 10, that is, the pillow 100 only has the headrest cushion 20A disposed at a portion for the user's head to rest.

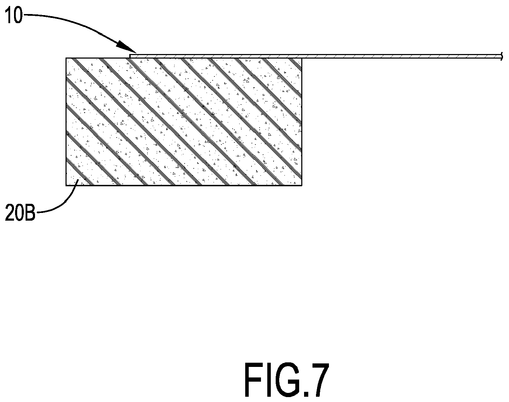

With reference to Fig. 7, the supporting structure 10 may even omit the connecting elements 12, and the multiple supporting elements 11 are directly connected to the supporting cushion 20B. In addition, the pillow 100 in accordance with the present invention may further have a pillow case made of cloth. The pillow case may be sleeved on the headrest cushion 20A and the supporting cushion 20B.

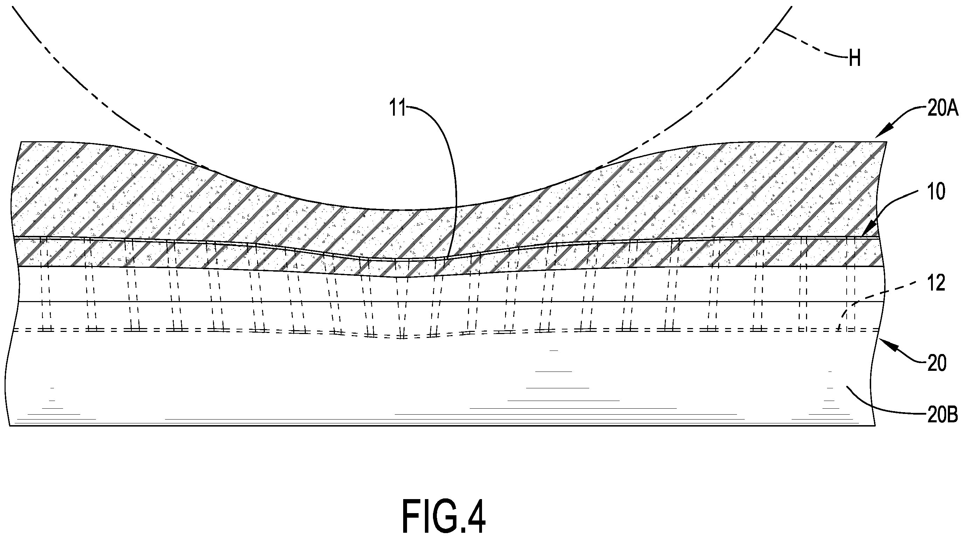

With reference to Fig. 4, the user's head H is resting on the middle section of the pillow 100 in accordance with the present invention. The widths of the multiple supporting elements 11 gradually decrease from two opposite ends 101, 102 of the pillow 100 towards a middle section of the pillow 100 as mentioned above. Therefore, the supporting elements 11 disposed at the middle section of the pillow 100 are subjected to maximum pressure and have maximum deformations accordingly. And, each one of the multiple supporting elements 11 is connected to the two connecting elements 12 via the two opposite ends of the supporting element 11. Middle sections of the supporting elements 11 disposed at the middle section of the pillow 100 can be expanded toward the two opposite ends 101, 102 of the pillow 100 by being subjected to the pressure. Therefore, the supporting elements 11 disposed at the middle section of the pillow 100 can wrap the user's head H and can support the user's head H laterally.

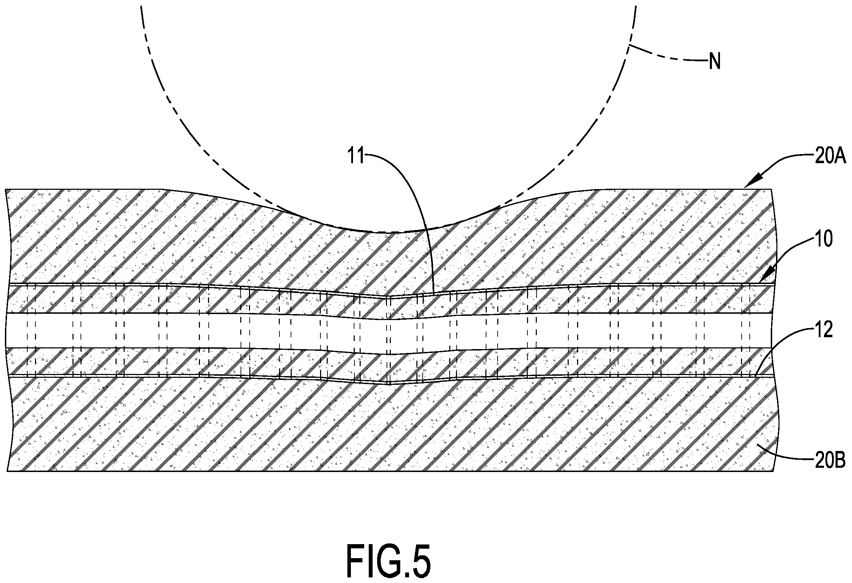

With reference to Fig. 5, when the user's head is resting on the pillow 100 in accordance with the present invention, a neck of the user is resting on one of the two lateral sides 103, 104 of the pillow 100. Since the two opposite ends of each supporting element 11 are respectively connected to the two connecting elements 12, portions respectively disposed adjacent to the two opposite ends of each supporting element 11 are difficult to be expanded. Therefore, either of the lateral sides 103, 104 can provide sufficient support to the user's neck. Moreover, since the supporting cushion 20B is disposed beneath the two connecting elements 12 and supports the two connecting elements 12, weight of the user's neck is transmitted via the headrest cushion 20A, the supporting structure 10, and to the supporting cushion 20B. The supporting cushion 20B being resilient and deformable provides a space for deformation and depression to either connecting element 12. Therefore, the portions of the supporting elements 11 disposed adjacent to either of the lateral sides 103, 104 can be concentrated as being subjected to the weight of the user's neck and enhance support to the user's neck.

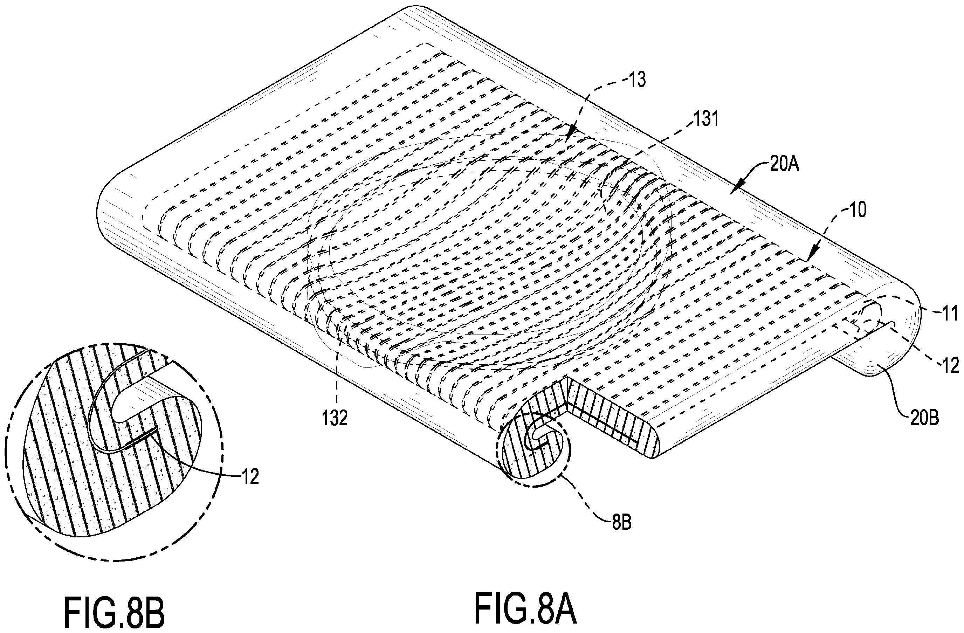

With further reference to Figs. 8A and 8B, a second embodiment of the present invention is shown. The second embodiment is similar to the first embodiment. In the second embodiment, the pillow 100 also has the supporting structure 10, the headrest cushion 20A and the supporting cushion 20B with the headrest cushion 20A and the supporting cushion 20B being wrapped around and covering the supporting structure 10. In the second embodiment of the present invention, the supporting structure 10 further has a recess 13. The recess 13 is concaved on the supporting elements 11 disposed at the middle section of the pillow 100 in accordance with the present invention. The recess 13 has a headrest area 131 and a neck-rest area 132. The headrest area 131 is disposed at the middle section of the supporting elements 11 disposed at the middle section of the pillow 100. The headrest cushion 20A is recessed according to position of the headrest area 131. The neck-rest area 132 is disposed adjacent to one of the two opposite ends of each supporting element 11 disposed at the middle section of the pillow 100. The neck-rest area 132 is disposed at one of the two lateral sides 103, 104 of the pillow 100.

Furthermore, in the second embodiment, the supporting structure 10 is made of composite materials with thermoplastic matrix. Each one of the two connecting elements 12 has two sheets. One of the two opposite ends of each supporting element 11 is clamped between the two sheets of one of the two connecting elements 12. The other one of the two opposite ends of the supporting element 11 is clamped between the two sheets of the other one of the two connecting elements 12. Each supporting element 11 is connected to the two connecting elements 12 via hot pressing. Practically, the two connecting elements 12 may be made of different materials.

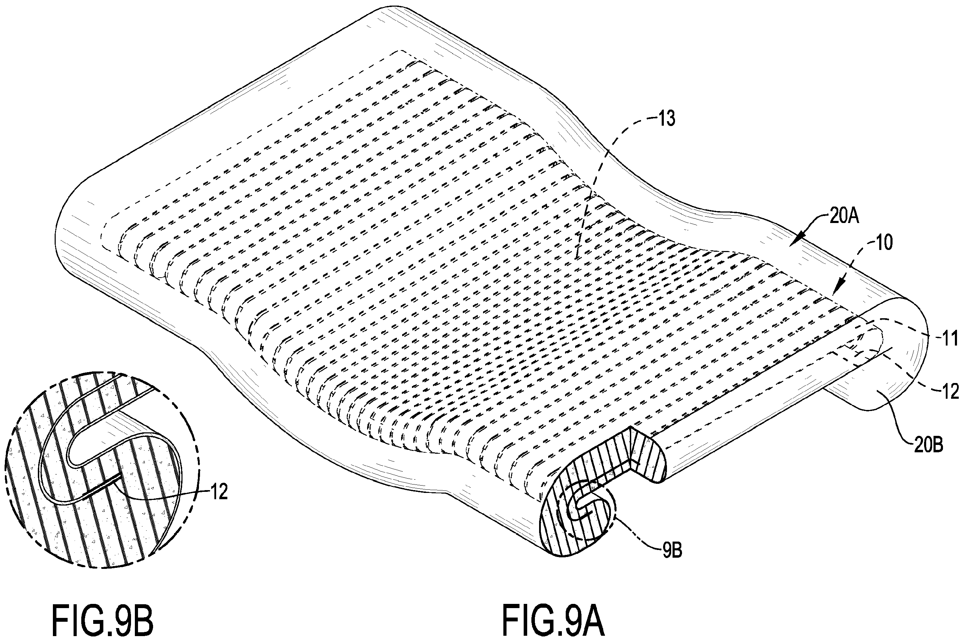

With further reference to Figs. 9A and 9B, a third embodiment of the present invention is shown. The third embodiment and the second embodiment are similar. In the third embodiment, the pillow 100 also has the supporting structure 10, the headrest cushion 20A and the supporting cushion 20B with the headrest cushion 20A and the supporting cushion 20B being wrapped around and covering the supporting structure 10. In the third embodiment of the present invention, the recess 13 of the supporting structure 10 is also recessed on the supporting elements 11 disposed at the middle section of the pillow 100 in accordance with the present invention. In the third embodiment, the recess 13 extends to the two lateral sides 103, 104 of the pillow 100.

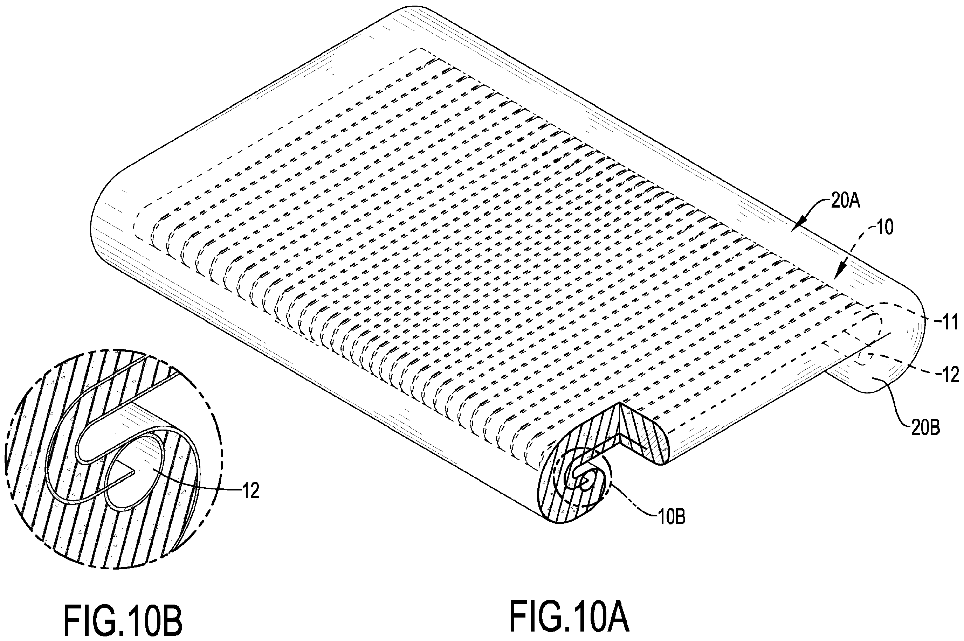

With further reference to Figs. 10A and 10B, a fourth embodiment of the present invention is shown. The fourth embodiment and the first embodiment are similar. In the fourth embodiment, the pillow 100 also has the supporting structure 10, the headrest cushion 20A and the supporting cushion 20B with the headrest cushion 20A and the supporting cushion 20B being wrapped around and covering the supporting structure 10. In the fourth embodiment, each one of the two connecting elements 12 is a tube with a peripheral wall. The two opposite ends of each supporting element 11 are respectively inserted through the peripheral walls of the two connecting elements 12.

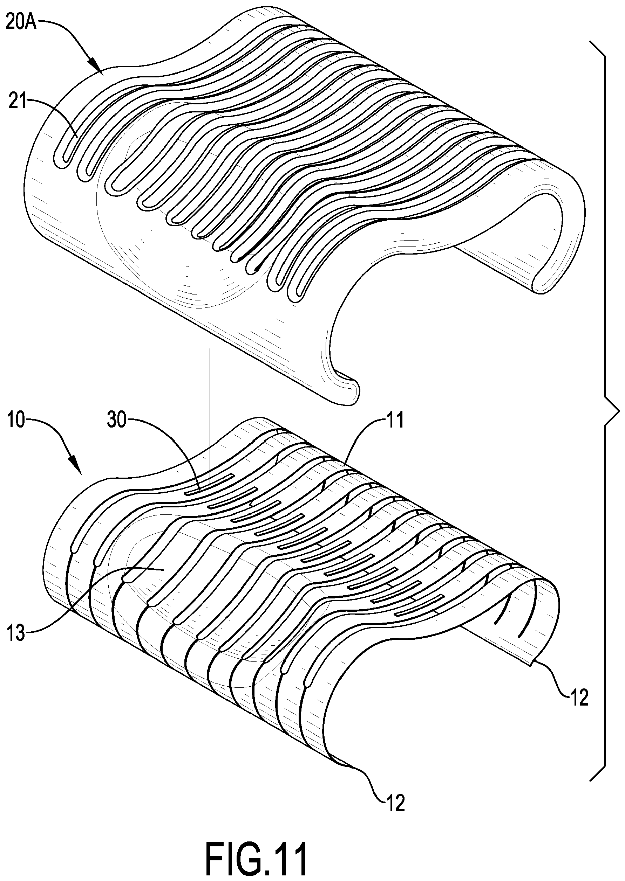

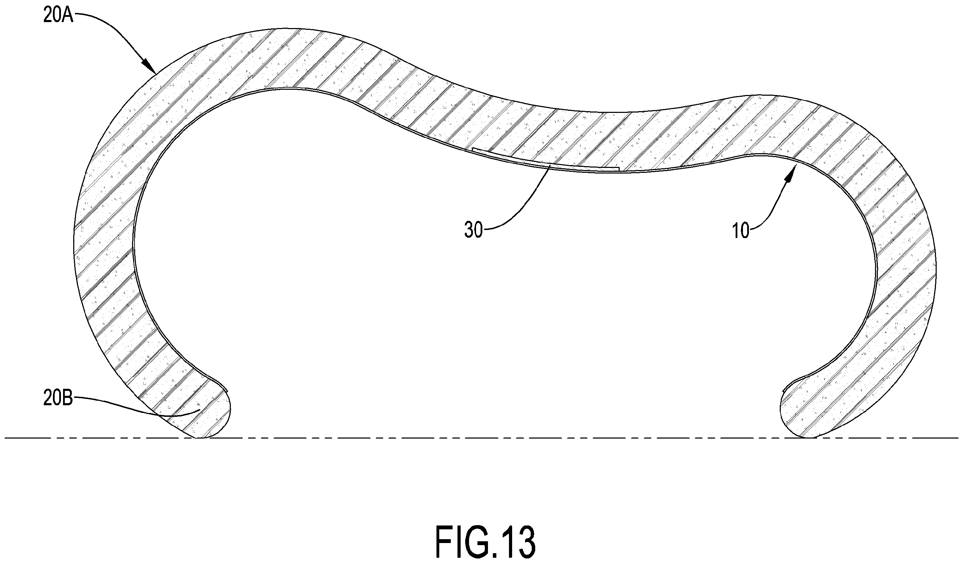

With further reference to Figs. 11 to 13, a fifth embodiment of the present invention is shown. The fifth embodiment and the second embodiment are similar.

In the fifth embodiment, the pillow 100 also has the supporting structure 10, the headrest cushion 20A and the supporting cushion 20B with the headrest cushion 20A and the supporting cushion 20B being wrapped around and covering the supporting structure 10. And the supporting structure 10 also has the recess 13. In the fifth embodiment, the pillow 100 further has multiple flexible sensors 30. In the fifth embodiment, the recess 13 is disposed at one of the two lateral sides 103, 104 of the pillow 100. The supporting plate of the supporting structure 10 has multiple through holes 14 and multiple slits 15. Each one of the through holes 14 is formed between two of the supporting elements 11 that are disposed adjacent to each other, is elongated, and is parallel to the multiple supporting elements 11. Each two of the slits 15 are formed between two of the supporting elements 11 that are disposed adjacent to each other, and the two slits respectively extend from two opposite ends of a corresponding one of the through holes toward opposite directions. Each slit 15 has a width being narrower than a width of each through hole 14.

In the fifth embodiment, the headrest cushion 20A has multiple vents 21. The multiple vents 21 are respectively aligned with the through holes 14 and respectively communicate with the through holes 14 for providing good ventilation and convection to the head of the user.

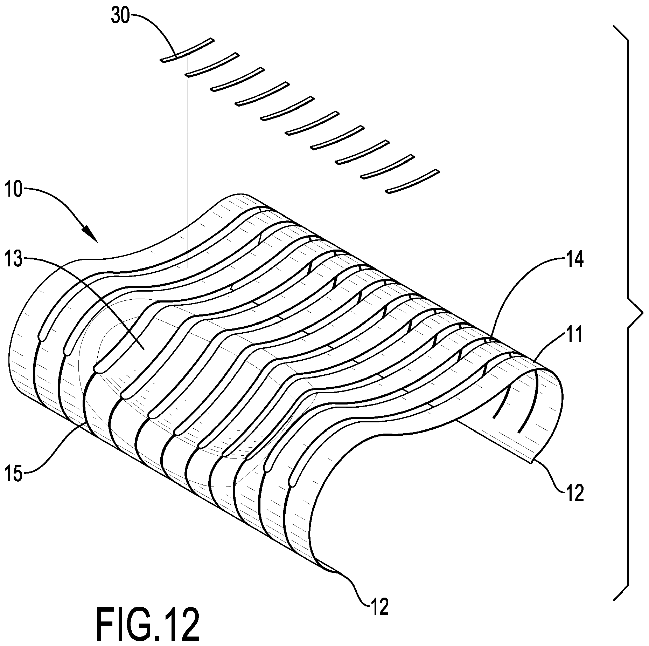

With reference to Figs. 11 and 12, each flexible sensor 30 includes a flexible printed circuit. The multiple flexible sensors 30 are respectively mounted to the multiple supporting elements 11 and are arranged in an array. The multiple flexible sensors 30 can fully capture data regarding contact between the user and the pillow 100 in accordance with the present invention.

Each flexible sensor 30 may be a pressure sensor and is disposed on a top face of a corresponding one of the supporting elements 11. When the user's head and neck are resting on the headrest cushion 20A, pressure caused by weight of the user's head and neck is transmitted to each flexible sensor 30. Then, each sensor 30 obtains data of the pressure.

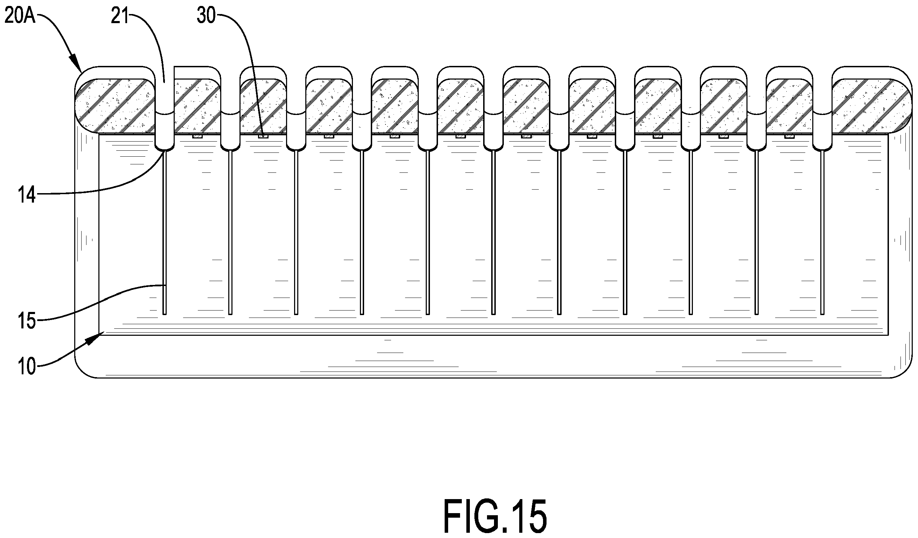

With further reference to Fig. 15, in a sixth embodiment of the present invention, each flexible sensor 30 may be a flex sensor and is disposed on a bottom face of a corresponding one of the supporting elements 11. When the pressure caused by the weight of the user's head and neck is subjected to the headrest cushion 20A, the pressure is transmitted to each supporting element 11. Each supporting element 11 subjected to the pressure is deformed. A corresponding one of the flexible sensors 30 attached to the supporting element 11 can detect deformation of the supporting element 11 and obtain the data of the pressure.

In the present invention, each supporting element 11 can be independently pressed and independently restore. Therefore, the pillow 100 in accordance with the present invention provides function of independent support similar to Marshall coils. With reference to Figs. 4 and 5, when the user's head is resting on the pillow 100, each supporting element 11 can be independently pressed, independently restore, and generate deformations of different degrees. Therefore, the pillow 100 in accordance with the present invention provides independent support.

The through hole 14 disposed between each two adjacent supporting elements 11 communicates with a corresponding one of the vents 21, which not only provides ventilation and convection, but also promotes degree of deformation of each supporting element 11. Therefore, the supporting elements 11 produce different deformations according to contour of the user's head and provide sufficient support to the user's neck. Compared to the conventional pillow with Marshall coils that is difficult to be equipped with sensors, the top face and the bottom face of each supporting element 11 can be conveniently equipped with the flexible sensor 30 to obtain the data of contact between the user and the pillow 100.

In the fifth embodiment, the two slits 15 disposed between each two adjacent supporting elements 11 further promote the degree of deformation of each supporting element 11. Each supporting element 11 can rapidly and agilely deform according to the pressure generated by the user's head and neck. The data obtained by the multiple flexible sensors 30 is distinguishable and reliable. Particularly, when each flexible sensor 30 is a flex sensor, the two slits 15 disposed between each two adjacent supporting elements 11 facilitate each supporting element 11 to deform with ease and facilitate a corresponding flexible sensor 30 to obtain data.

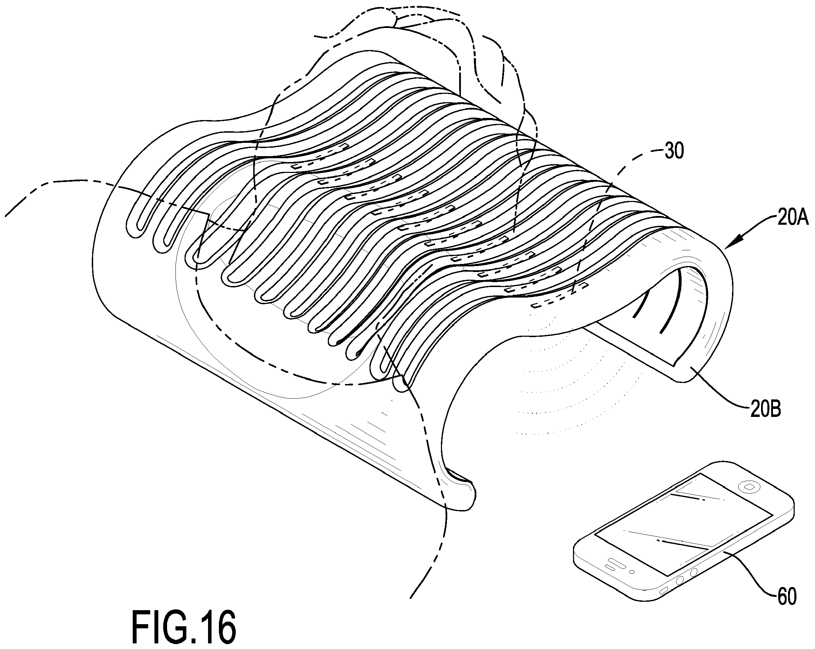

With reference to Fig. 16, the multiple flexible sensors 30 can obtain quantifiable data and transmit the quantifiable data to a cell phone 60 or the internet via wired or wireless transmission. The quantifiable data is computed to define behavior patterns of the users. For instance, the quantifiable data can be used to determine whether the user lies on his back or side. The user can change his/her behavior patterns to improve sleep quality. The data collected by the multiple flexible sensors 30 in a long term can be used as a basis for observing shift of the user's behavior patterns.

In addition, though the supporting structure 10, the headrest cushion 20A, the supporting cushion 20B, and the flexible sensors 30 are applied to pillows, these features may be also applied to mattresses, seat cushions, or back cushions. Arranging patterns and structures of the multiple supporting elements 11 may be designed according to different products.

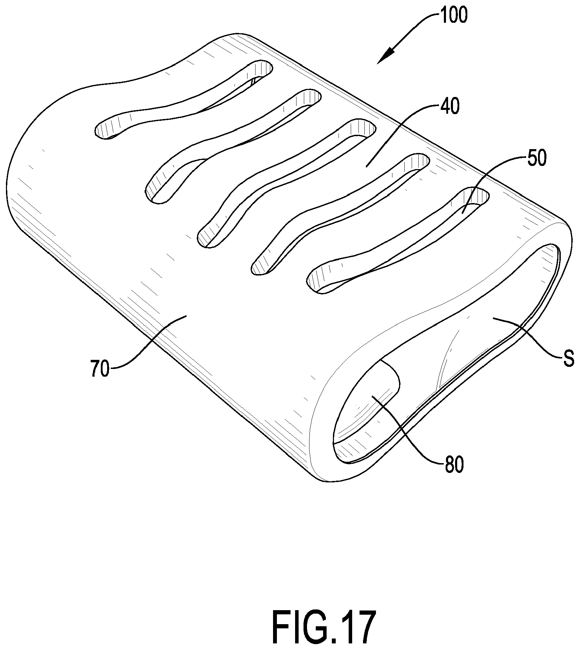

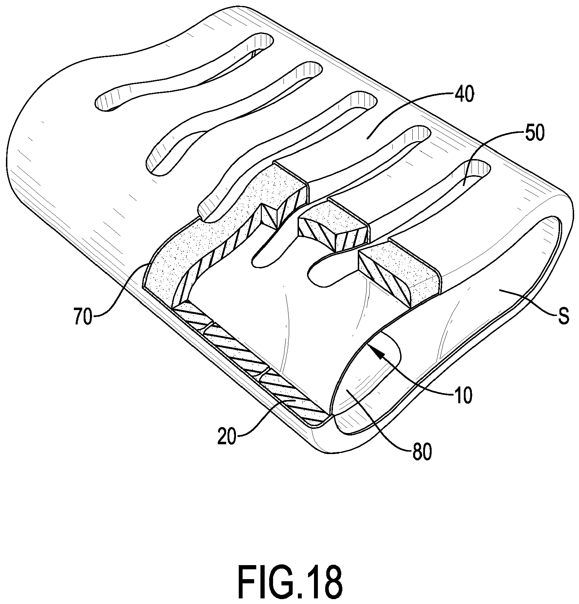

With reference to Figs. 17 and 18, a seventh embodiment of the pillow 100 with composite material supporting structure in accordance with the present invention is elongated and has an elongating direction, a supporting structure 10, a cushion 20, a pillow case 70, a headrest portion 40, multiple vents 50, and an audio player 80.

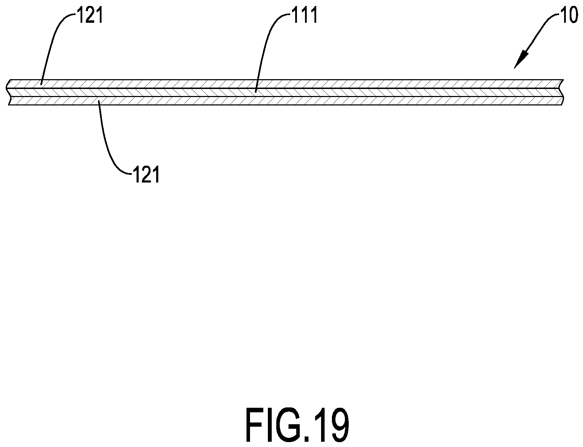

With reference to Figs. 17 and 18, the supporting structure 10 is made of composite materials. The supporting structure 10 is resiliently bended and extends along the elongating direction. The supporting structure 10 is pre-stressed and is able to restore to its original configuration after being pressed by load. With reference to Figs. 17 and 18, the supporting structure 10 of the seventh embodiment has a cross-section being annular and a receiving space S is enclosed by the supporting structure 10. Cell phones, portable chargers, or the audio player 80 can be stored in the receiving space S. With reference to Figs. 18 and 19, the supporting structure 10 has a carbon fiber composite layer 111 and two glass fiber composite layers 112. The carbon fiber composite layer 111 is clamped between the two glass fiber composite layers 112. Since glass fibers have better tenacity than carbon fibers, the supporting structure 10 with the carbon fiber composite layer 111 clamped by the two glass fiber composite layers 112 has good ductility to sustain loads and is less breakable. Moreover, when carbon fibers of the carbon fiber composite layer 111 are broken, the two glass fiber composite layers 112 wrap the carbon fiber composite layer 111 that is broken to avoid exposure of the broken carbon fibers. Practically, the supporting structure 10 may be implemented as a carbon fiber composite layer 111 covered by a glass fiber composite layer 112 or even be implemented as a carbon fiber composite layer 111. In the present invention, matrixes of the carbon fiber composite layer 11 and each glass fiber composite layer 112 are thermoplastic resin. The carbon fiber composite layer 111 and each glass fiber composite layer 112 are respectively reinforced by carbon fibers and glass fibers.

With reference to Figs. 17 and 18, the cushion 20 is wrapped around and covers the supporting structure 10. The cushion 20 may be made of foam, rubber, emulsion, or similar flexible materials. The pillow case 70 is sleeved on the cushion 20.

With reference to Figs. 17 and 18, the headrest portion 40 is recessed in a top of the pillow 100. The headrest portion 40 is designed according to a user's head contour for receiving and well supporting the user's head.

With reference to Figs. 17 and 18, the multiple vents 50 are defined through the headrest portion 40 and communicate with the receiving space S for providing the user's head with good ventilation and convection. In the seventh embodiment of the present invention, each one of the multiple vents 50 is elongated and extends across the elongating direction of the pillow 100. Specifically, each vent 50 extends laterally.

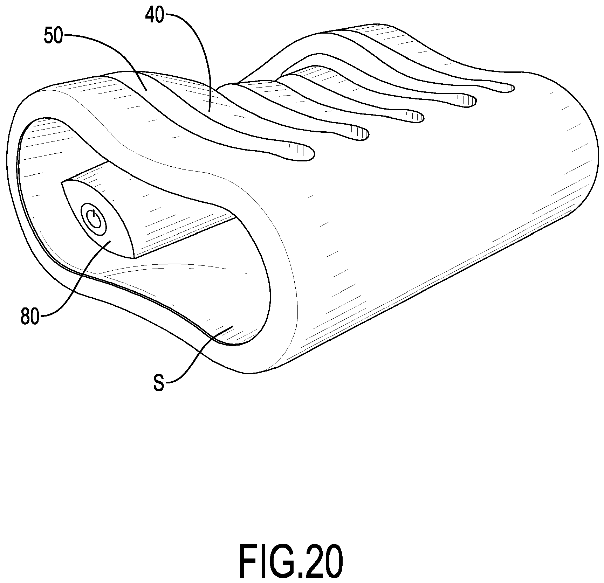

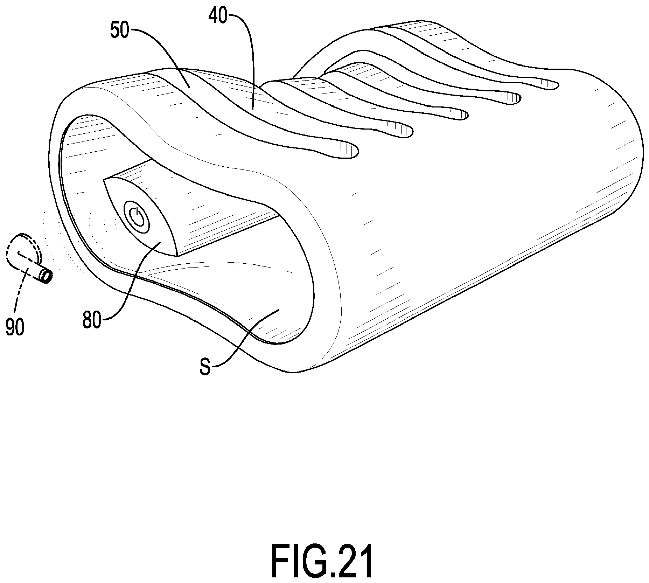

With reference to Figs. 18 and 20, the audio player 80 is disposed in the receiving space S. The audio player 80 can play relaxing music, sounds of birds, woods, or flowing water before falling sleep. The audio player 80 may even play pleasant sounds that can trigger autonomous sensory meridian response (ASMR). The audio player 80 may also play sounds in the morning for wake-up alarm. When the user's head rests on the headrest portion 40, the supporting structure 10 is disposed between the audio player 80 in the receiving space S. The supporting structure 10 isolates the audio player 80 and the user's head even when the cushion 20 and the supporting structure 10 are pressed by the user's head. The supporting structure 10 prevents the user's head from abutting against a hard casing of the audio player 80 to avoid discomfort. With reference to Figs. 20 and 21, the audio player 80 may further comprise a radio-frequency identification (RFID) module. The RFID module may be connected to a wireless headphone via short-range wireless communication protocols to expand applications of the present invention.

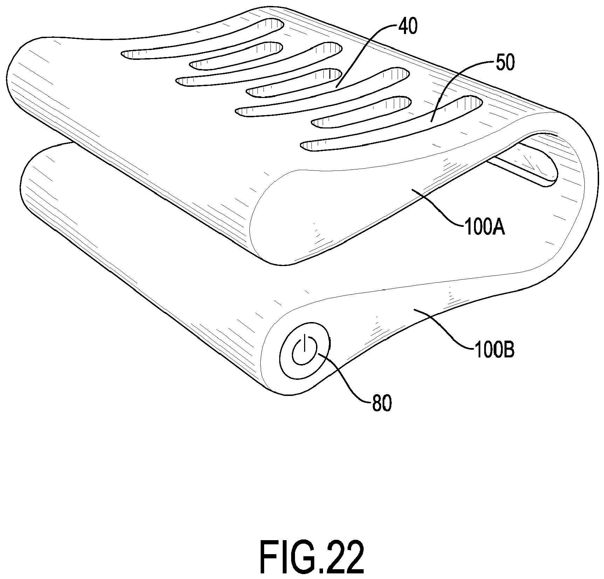

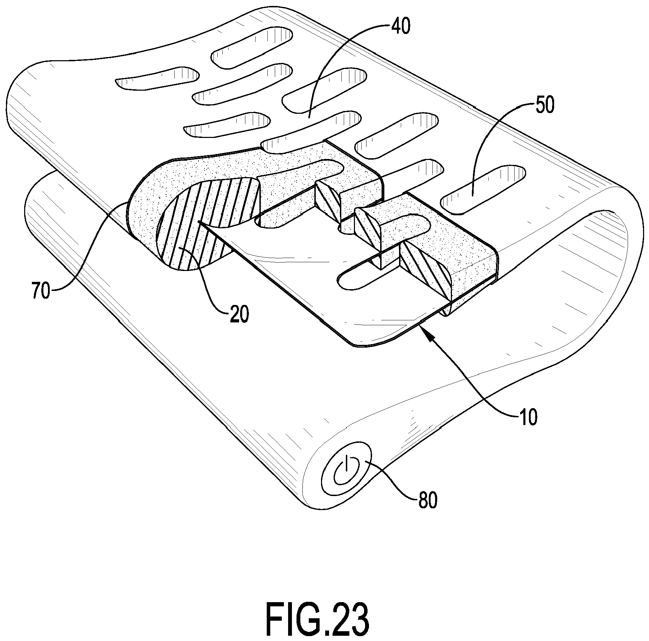

An eighth embodiment of the pillow 100 in accordance with the present invention is shown in Figs. 22 and 23. Figs. 22 and 23 respectively show two different configurations of the eighth embodiment. The eighth embodiment is similar to the seventh embodiment. The eighth embodiment also has the supporting structure 10, the cushion 20 wrapped around and covering the supporting structure 10, the pillow case 70 sleeved on the cushion 20, the headrest portion 40 recessed in the top of the pillow 100, the multiple vents 50 defined through the headrest portion 40, and the audio player 80 that can make sounds. In the eighth embodiment, the supporting structure 10 is made of composite materials, pre-stressed and resiliently bended as well.

With reference to Figs. 22 and 23, in the eighth embodiment, the pillow 100 in accordance with the present invention is also U-shaped in cross-section. The pillow 100 in the eighth embodiment also has a first arm 100A, a second arm 100B, and an opening disposed at a lateral side of the pillow 100. The first arm 100A and the second arm 100B extend along a same direction. The headrest portion 40 is recessed in the first arm 100A. The audio player 80 is mounted inside the second arm 100B. In the eighth embodiment of the present invention, the headrest portion 40 and the audio player 80 are respectively disposed at the first arm 100A and the second arm 100B. Therefore, the eighth embodiment can prevent the user's head from abutting against the audio player 80 and feeling uncomfortable.

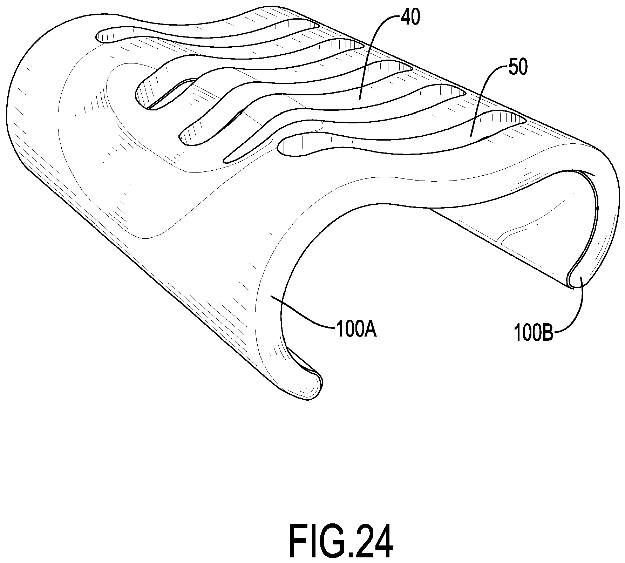

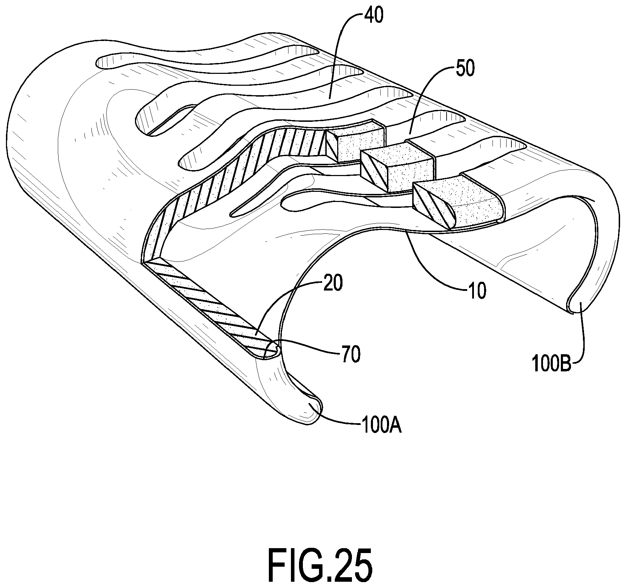

With reference to Figs. 24 and 25, the ninth embodiment is similar to the eighth embodiment. The ninth embodiment also has the supporting structure 10, the cushion 20, the pillow case 70, the headrest portion 40, and the multiple vents 50. In the ninth embodiment, the pillow 100 is also U-shaped in cross-section, and has the first arm 100A, the second arm 100B, and the opening. In the ninth embodiment, the first arm 100A and the second arm 100B extend downward together, and the opening is disposed at a bottom of the pillow 100.

The supporting structure 10 and the cushion 20 of the pillow 100 in accordance with the present invention have different elastic modulus. Therefore, the pillow 100 is able to provide two-stage resilient support. The cushion 20 is compressed easily when the pillow 100 is subjected to the weight of the user's head. Then, the supporting structure 10 being resiliently bended provides sufficient support to the cervical spine of the user. The pillow 100 in accordance with the present invention offers appropriate support to the cervical spine of the user. The cervical spine of the user can rest in natural relaxation when the user rests on the pillow 100.

In the first and eighth embodiments of the present invention, even if the cushion 20 and the supporting structure 10 are compressed when being subjected to the weight of the user's head, the supporting structure 10 isolates the user's head and the audio player 80, prevents the user's head from abutting against the audio player 80, and keeps the user comfortable.

Furthermore, in the present invention, the carbon fiber composite layer 111 is clamped between the two glass fiber composite layers 112. When the carbon fibers of the carbon fiber composite layer 111 is broken, the two glass fiber composite layers 112 with better tenacity can avoid exposure of the broken fibers.

## Claims

1. A pillow (100), **characterized in that** the pillow (100) comprises:
a supporting structure (10) having a supporting plate, the supporting plate having multiple supporting elements (11) disposed at intervals, and the supporting elements (11) being independently deformable by being independently pressed and independently restoring; and
a headrest cushion (20A) being resilient and supported by the supporting plate for supporting a head of a human.

2. The pillow (100) as claimed in claim 1, wherein each one of the multiple supporting elements (11) is elongated, and the multiple supporting elements (11) are parallelly disposed.

3. The pillow (100) as claimed in claim 2, wherein
the supporting structure (10) has a connecting element (12);
one of two opposite ends of each one of the multiple supporting elements (11) is connected to the connecting element (12).

4. The pillow (100) as claimed in claim 2, wherein
the supporting structure (10) has two connecting elements (12);
two opposite ends of each one of the multiple supporting elements (11) are respectively connected to the two connecting elements (12).

5. The pillow (100) as claimed in any one of claims 1 to 4, wherein
the supporting structure (10) is pre-stressed and resiliently bended and is made of a composite material with thermoplastic matrix.

6. The pillow (100) as claimed in claim 5, wherein widths of the multiple supporting elements (11) gradually decrease from two opposite ends of the pillow (100) toward a middle section of the pillow (100).

7. The pillow (100) as claimed in claim 6, wherein the pillow (100) has multiple flexible sensors (30) respectively mounted to the multiple supporting elements (11), and each one of the multiple flexible sensors (30) is a pressure sensor or a flex sensor.

8. The pillow (100) as claimed in claim 2, wherein
the supporting plate of the supporting structure (10) has multiple through holes (14), and each one of the through holes (14) is formed between two of the multiple supporting elements (11) that are disposed adjacent to each other, is elongated, and is parallel to the multiple supporting elements (11).

9. The pillow (100) as claimed in claim 8, wherein
the supporting plate of the supporting structure (10) has multiple slits (15), each two of the slits (15) are formed between two of the multiple supporting elements (11) that are disposed adjacent to each other, and the two slits (15) respectively extend from two opposite ends of a corresponding one of the through holes (14) toward opposite directions; and
each slit (15) has a width being narrower than a width of each through hole (14).

10. The pillow (100) as claimed in claim 1, wherein the supporting structure (10) has two glass fiber composite layers (112) and a carbon fiber composite layer (111) disposed between the two glass fiber composite layers (112) .

11. The pillow (100) as claimed in claim 1, wherein a receiving space (S) is enclosed by the supporting structure (10).

12. The pillow (100) as claimed in claim 11, wherein
the pillow (100) is U-shaped in cross-section and has
a first arm (100A) and a second arm (100B) extending to a same direction; and
an opening disposed at a lateral side of the pillow (100).

13. The pillow (100) as claimed in claim 12, wherein
the pillow (100) has
a headrest portion (40) recessed in the first arm (100A); and
an audio player (80) mounted inside the second arm (100B).

14. The pillow (100) as claimed in claim 11, wherein
the pillow (100) is U-shaped in cross-section and has
a first arm (100A) and a second arm (100B) extending downward; and
an opening disposed at a bottom of the pillow (100) .

15. The pillow (100) as claimed in claim 6, wherein the pillow (100) has a supporting cushion (20B) disposed below the supporting structure (10).
